Europäisches Patentamt

European Patent Office

Office européen des brevets

(19)

(11) Veröffentlichungsnummer : **0 181 426**
**B1**

(12) **EUROPÄISCHE PATENTSCHRIFT**

(45) Veröffentlichungstag der Patentschrift :
22.02.89

(21) Anmeldenummer : 85102944.7

(22) Anmeldetag : 14.03.85

(51) Int. Cl.⁴ : **E 04 F 15/16, B 32 B 33/00**

(54) **Elektrisch leitender Tisch- oder Bodenbelag.**

(30) Priorität : 07.11.84 DE 3440572

(43) Veröffentlichungstag der Anmeldung :
21.05.86 Patentblatt 86/21

(45) Bekanntmachung des Hinweises auf die Patenterteilung : 22.02.89 Patentblatt 89/08

(84) Benannte Vertragsstaaten :
AT BE CH DE FR GB IT LI LU NL SE

(56) Entgegenhaltungen :
DE--A-- 2 824 739
DE--A-- 3 237 633
DE--B-- 2 652 683

(73) Patentinhaber : **Firma Carl Freudenberg**
**Höhnerweg 4**
**D-6940 Weinheim/Bergstrasse (DE)**

(72) Erfinder : **Schütze, Gerhard**
**Beethovenstrasse 16**
**D-6711 Hessheim (DE)**
Erfinder : **Kühl, Hans Michael**
**Tilsiter Strasse 34**
**D-6944 Hemsbach (DE)**
Erfinder : **Graab, Gerhard, Dr.**
**Rüsselsheimer Strasse 5**
**D-6800 Mannheim (DE)**

(74) Vertreter : **Weissenfeld-Richters, Helga, Dr.**
**Höhnerweg 2**
**D-6940 Weinheim/Bergstrasse (DE)**

**Beschreibung**

Die Erfindung betrifft einen elektrisch leitenden Tisch- oder Bodenbelag, umfassend eine Ableitschicht aus elektrisch leitfähigem Gummi oder Kunststoff, die zusammenhängend ausgebildet und durch einen metallischen Leiter mit einer Erdleitung verbunden ist, sowie aus einer oberhalb der Ableitschicht angeordneten Nutzschicht, die einen höheren elektrischen Widerstand aufweist als die Ableitschicht.

Ein Bodenbelag der vorgenannten Art wird beispielsweise in der DE-OS 28 24 739 beschrieben. Die Nutzschicht ist dabei kontinuierlich ausgebildet und deckt die Ableitschicht auf der gesamten Oberfläche ab. In ihre Oberfläche eingeleitete elektrische Spannungen müssen daher durch den Werkstoff der Nutzschicht in die Ableitschicht abgeleitet werden, was außerordentlich schwierig in definierter Weise realisierbar ist.

Die Verwendung von Bodenbelägen mit einer definierten elektrischen Ableitfähigkeit ist für zahlreiche Räumlichkeiten vorgeschrieben, beispielsweise für Operationssäle und Räume, in denen elektrische Datenverarbeitungsanlagen oder explosionsgefährdete Stoffe untergebracht sind. Die Ableitfähigkeit wird üblicherweise durch den Ableitwiderstand definiert. Dieser hat je nach Anwendungsbereich eine unterschiedliche Größe und soll nach den gesetzlichen Bestimmungen in Operationssälen zwischen $2 \times 10^6$ und $10^4$ Ohm betragen, in Räumen, in denen elektrische Datenverarbeitungsanlagen untergebracht sind weniger als $10^9$ Ohm und in Lagerräumen für explosionsgefährdete Stoffe weniger als $10^6$ Ohm. Die Ausstattung der verschiedenen Räumlichkeiten erfordert daher unterschiedlich aufgebaute Fußbodenbeläge, was aus Gründen der Herstellkosten und Lagerhaltung wenig befriedigend ist.

Die Einstellung des elektrischen Ableitwiderstandes erfolgt bei Fußbodenbelägen nach der DE-OS 28 24 739 durch Einmischen einer definierten Menge einer antistatisch wirksamen, chemischen Substanz in den für die Herstellung der Nutz- bzw. Ableitschicht verwendeten Werkstoff.

Alkylsulfate, Alkylsulfonate, quartäre Stickstoffbasen, äthoxylierte Fettamine, Alkylolamine, Phosphorsäureester, Polyglykolester und Ruße werden diesbezüglich in der genannten Druckschrift angegeben. Sie haben indessen entweder den Nachteil einer leichten Auswaschbarkeit durch das während der späteren Reinigung verwendete Wasser oder einer Dunkelfärbung des Fußbodenbelages, was gleichermaßen unbefriedigend ist. Dennoch ist die Erzielung eines definierten Ableitwiderstandes des gesamten Fußbodenbelages nur durch Verwendung einer entsprechend modifizierten Werkstoffmischung äußerst problematisch insofern, als der letztlich erzielte Ableitwiderstand unter anderem auch durch die Dicke der einzelnen Schichten des Fußbodenbelages sowie die Hygroskopizität des verwendeten Werkstoffes mitbestimmt wird, somit durch Größen, die während der späteren Benutzung des Fußbodenbelages erheblichen Veränderungen unterliegen können.

Der Erfindung liegt die Aufgabe zugrunde, einen standardisierten, elektrisch leitenden Tisch- oder Bodenbelag zu zeigen, der unabhängig von der Belastung mit wäßrigen Flüssigkeiten oder dem eingetretenen Verschleiß den für die verschiedenen Räumlichkeiten geltenden Sicherheitsvorschriften in gleicher Weise gerecht wird. Der Tisch- oder Fußbodenbelag soll darüber hinaus auch mit einer hellfarbigen oder gegebenenfalls bunten Nutzfläche versehen werden können.

Diese Aufgabe wird erfindungsgemäß bei einem elektrisch leitenden Tisch- oder Bodenbelag der eingangs genannten Art dadurch gelöst, daß die Ableitschicht in dicht benachbarten Flächenbereichen Vorsprünge aufweist, die die Nutzschicht in Richtung der Nutzfläche ganz durchdringen, daß die Ableitschicht auf der der Nutzschicht gegenüberliegenden Seite durch eine Isolierschicht eines extrem hohen elektrischen Widerstandes abgedeckt ist und daß der metallische Leiter einen Verstellwiderstand enthält. Auf vorteilhafte Ausgestaltungen nehmen die Unteransprüche Bezug.

Die Erzeugung und gegenseitige Verbindung der einzelnen Schichten des erfindungsgemäß vorgeschlagenen elektrisch leitenden Tisch- oder Fußbodenbelages kann prinzipiell an die Verfahrensführungen gemäß der DE-OS 32 37 633 angelehnt sein. Danach wird die Nutzschicht aus einem Werkstoff eines hohen elektrischen Widerstandes erzeugt, mit Durchbrechungen versehen und anschließend mit der Ableitschicht aus einem Werkstoff hoher elektrischer Leitfähigkeit derartig verpreßt, daß der Werkstoff der Ableitschicht die Durchbrechungen der Nutzschicht bis zur Oberfläche ausfüllt. Der gegenseitige Abstand, in dem die so gebildeten und die Nutzschicht durchdringenden Vorsprünge der Ableitschicht angeordnet sind, kann bei Verwendung eines Werkstoffes von guter Leitfähigkeit relativ groß bemessen sein und ca. 40 mm betragen bei Zugrundelegung eines Durchmessers von 2 mm. Das Erscheinungsbild eines entsprechenden Tisch- oder Bodenbelages wird mithin im wesentlichen durch Farbe und Strukturierung der elektrisch nicht leitenden Nutzschicht bestimmt.

Die Gestaltungsmöglichkeiten werden durch den Gehalt an elektrisch leitender Substanz nicht beeinträchtigt und sind dementsprechend außerordentlich vielfältig. Helle und bunte Einfärbungen sind ohne weiteres möglich.

In das gegenseitige Verpressen der Nutz- und der Ableitschicht kann deren gegenseitige Verbindung und gegebenenfalls die Verbindung der Ableitschicht mit der Isolierschicht einbezogen sein. Eine entsprechende Verfahrensführung empfiehlt sich bei der Verwendung beliebiger polymerer Werkstoffe für die Erzeugung der drei Schichten. In Fällen, in denen ein besonders attraktives Erscheinungsbild der Oberfläche angestrebt wird, hat es sich darüber hinaus als zweckmäßig erwiesen, wenn die Nutzschicht aus einem Werkstoff erzeugt ist, der unter den Bedingungen des Verpressens mit der Ableitschicht eine höhere Fließviskosität aufweist als diese. Hierdurch wird eine gute Konturenschärfe zwischen den verschiedenfarbigen Bereichen erhalten. Die Fließviskosität wird bei gummielastischen Werkstoffen als mooney-Viskosität bezeichnet.

Eine entsprechende Abstimmung der Fließviskositäten der Nutzschicht und der Ableitschicht läßt sich durch Auswahl entsprechend unterschiedlicher Werkstoffe für die beiden Schichten erzielen. Die Ableitschicht kann beispielsweise aus einem gummielastischen Werkstoff bestehen, die Nutzschicht aus einem thermoplastischen Werkstoff. Besonders geeignet sind Polyester und Polyamid, wobei sowohl Folien als auch Gewebe, Gewirke oder Vliesstoffe in bezug auf die Erzeugung der Nutzschicht zur Anwendung gelangen können.

Es ist im Einzelfalle lediglich zu prüfen, ob eine ausreichend stabile Haftung zu der Ableitschicht erzielbar ist, und diese läßt sich gegebenenfalls verbessern durch Einbringen einer Schicht aus einem Haftvermittler, beispielsweise aus einem Polyurethankleber, einem Polychloroprenkleber, einem Resorcin-Formaldehydlatex oder einer Chlor-Kautschuklösung. Bei offenmaschigen Schichten, beispielsweise einem Gewebe oder einem Vliesstoff, verhindert eine derartige Schicht zugleich das Einbringen des während der Vulkanisation erweichenden, gummielastischen Werkstoffes der Ableitschicht in die Poren der Nutzschicht. Die Gefahr einer Oberflächenverschmutzung der Nutzschicht läßt sich hierdurch beseitigen.

In Fällen, in denen die Ableitschicht und die Nutzschicht aus artverwandten Werkstoffen erzeugt werden sollen, beispielsweise aus einem gummielastischen Werkstoff, läßt sich die erwünschte Erhöhung der Fließviskosität des Werkstoffes der Nutzschicht unter den Bedingungen des Verpressens erzielen durch Einmischen eines relativ größeren Gehaltes eines mineralischen Füllstoffes. Im gleichen Sinne läßt sich die Fließviskosität der Ableitschicht vermindern durch Verwendung bzw. durch Einmischen eines copolymeren Werkstoffes mit besonders niedriger Fließviskosität bzw. durch Verwendung eines andersartigen, speziellen Vulkanisiermittels. Es ist auch möglich, die Nutz- und die Ableitschicht aus, abgesehen von dem Gehalt an elektrisch leitenden Zuschlagsstoffen, identischen gummielastischen Werkstoffen zu erzeugen, wenn die Nutzschicht vor der gemeinsamen Verpressung anvulkanisiert und dadurch an einem synchronen Erweichen während des gemeinsamen Verpressens mit der Ableitschicht gehindert wird.

Durch die Hinterlegung des erfindungsgemäß vorgeschlagenen, elektrisch leitenden Tisch- oder Bodenbelages mit einer elektrisch isolierenden Schicht ist der Ableitwiderstand vollkommen unabhängig von gegebenenfalls Variationen unterworfenen Ableitwiderständen des tragenden Tisches oder Bodens auf präzise Werte einstellbar. Das geschieht durch Justierung eines Verstellwiderstandes, der in dem metallischen Leiter angeordnet ist, welcher die Ableitschicht mit der Erdleitung verbindet. Eine Nachjustierung ist ohne großen Aufwand gegebenenfalls von Hilfskräften vornehmbar und kann gegebenenfalls auch automatisch erfolgen durch Verbindung des Verstellwiderstandes mit einer selbsttätig arbeitenden Regeleinrichtung. Entsprechende Aggregate sind im Handel erhältlich.

Die mit dem erfindungsgemäß vorgeschlagenen Tisch- oder Bodenbelag erzielten Vorteile bestehen vor allem darin, daß dessen elektrischer Ableitwiderstand in Abhängigkeit von den im Einzelfalle bestehenden Erfordernissen durch einfache Betätigung des Verstellwiderstandes auf beliebige Werte einstellbar ist. Es genügt dadurch eine standardisierte Ausführung des erfindungsgemäß vorgeschlagenen Tisch- oder Bodenbelages für die verschiedensten Anwendungsfälle. Die bisher erforderliche Lagerhaltung wird dadurch stark entlastet und die Erzeugung stark vereinfacht. Ein weiterer Vorteil besteht daneben darin, daß die erfindungsgemäß vorgeschlagene Ausführung hellfarbig gestaltbar ist, was im Hinblick auf die Erzielung eines geschmacklich ansprechenden Erscheinungsbildes damit ausgestatteter Räumlichkeiten von großem Vorteil ist.

## Beispiel 1

Eine Gummimischung, bestehend aus der Rezeptur A wird in einem Innenmischer homogenisiert. Die Mischung wird anschließend auf einen Kalander gegeben, und zu einer Folie mit einer Dicke von 0,5 bis 1 mm ausgewalzt. Die Folie wird aufgewickelt und anschließend in einen Bandkalander überführt, in dem sie bei einer Oberflächentemperatur von 180 °C und einer Laufgeschwindigkeit von 80 m/h, d. h. einer Verweilzeit von ca. 3 Minuten vorvulkanisiert wird.

In den Innenmischer werden anschließend die Komponenten der Rezeptur I eingegeben und nach vollständiger Homogenisierung der Mischung zu einer Folie mit einer Dicke von 1,5 bis 2 mm ausgewalzt.

Ein Teil der Folie der Zusammensetzung A wird in einem Rollenstanzwerkzeug mit sie ganz durchdringenden Aussparungen versehen. Diese sind zylindrisch begrenzt und haben bei einem gleichbleibenden Abstand in Längsund Querrichtung von 20 mm einen Durchmesser von 1,8 mm. Die Aussparungen bilden in ihrer Gesamtheit ein Mosaik, das an ein Kachelmuster erinnert. Die Folie bildet im Sinne des vorgeschlagenen Gegenstandes die Nutzschicht. Sie ist derart eigenfest, daß sie ohne die Gefahr einer Beschädigung oder Verzerrung des aus Aussparungen gebildeten Musters manipuliert werden kann.

Anschließend wird die aus der Mischung nach Rezeptur I erzeugte Folie genommen, und oberseitig mit der gelochten Nutzschicht beschichtet und unterseitig mit der ungelochten Restfolie gleicher Zusammensetzung gemäß Rezeptur A. Das so erhaltene dreischichtige Laminat wird in einen beheizten Kalander überführt. Die mit den Durchbrechungen versehene Nutzschicht ist der polierten Kalanderwalze zugewandt. Diese hat bei einer Oberflächentemperatur von 180 °C eine Laufgeschwindigkeit von 36 m/h, was einer Verweildauer des dreischichtigen Gebildes von 6 Minuten entspricht. Die drei Schichten werden während dieser Zeit vulkanisiert und untrennbar miteinander verbunden. Die Oberfläche zeichnet sich durch eine durchgehende, kontinuierliche Vulkanisationshaut aus, die lediglich farblich durch den in die Aussparungen eingepreßten Werkstoff der Ableitschicht unterbrochen ist. Ein gleichwertiges Ergebnis läßt sich erzielen, wenn anstelle der polierten Kalanderwalze eine solche verwendet wird, die eine waffel- oder lederartig strukturierte Oberfläche aufweist oder ein entsprechendes Pressenwerkzeug.

Die Ableitschicht wird anschließend mit einem metallischen Leiter verbunden, der einen Verstellwiderstand enthält. Der Ableitwiderstand kann dadurch stufenlos im Bereich von $5 \times 10^3$ bis $5 \times 10^8$ Ohm variiert werden.

|  | A |  | I |  |
|---|---|---|---|---|
| SBR-Kautschuk | 15 | % | 11,8 | % |
| Hochstyrolharz (65 % Blockstyrol) | 2,4 | % | 5,6 | % |
| Kaolin | 60 | % |  | % |
| Ruß N770 |  |  | 61,5 | % |
| Kreide | 8,5 | % | 14,9 | % |
| Weichmacher | 1,7 | % | 3,35 | % |
| $TiO_2$ | 2,5 | % |  |  |
| Lithophne | 6,7 | % |  |  |
| ZnO | 0,7 | % | 0,7 | % |
| Stearinsäure | 0,35 | % | 0,35 | % |
| Triäthanolamin | 0,35 | % |  |  |
| Paraffin | 0,35 | % | 0,35 | % |
| Alterungsschutzmittel | 0,2 | % | 0,2 | % |
| 2-Mercaptobenzothiazol | 0,2 | % | 0,2 | % |
| Dibenzothiazyldisulfid | 0,2 | % | 0,2 | % |
| Schwefel | 0,85 | % | 0,85 | % |
|  | 100,00 | % | 100,00 | % |

Angaben in Prozent, bezogen auf das Gesamtgewicht der Mischung.

## Patentansprüche

1. Elektrisch leitender Tisch- oder Bodenbelag, umfassend eine Ableitschicht aus elektrisch leitendem Gummi oder Kunststoff, die zusammenhängend ausgebildet und durch einen metallischen Leiter mit einer Erdleitung verbunden ist, sowie eine oberhalb der Ableitschicht angeordnete Nutzschicht, die einen höheren elektrischen Widerstand aufweist als die Ableitschicht, dadurch gekennzeichnet, daß die Ableitschicht in dicht benachbarten Flächenbereichen Vorsprünge aufweist, die die Nutzschicht in Richtung der Nutzfläche ganz durchdringen, daß die Ableitschicht auf der der Nutzschicht gegenüberliegenden Seite durch eine Isolierschicht eines extrem hohen, elektrischen Widerstandes abgedeckt ist und daß der metallische Leiter einen Verstellwiderstand enthält.

2. Gegenstand nach Anspruch 1, dadurch gekennzeichnet, daß die Schichten unlösbar verbunden sind.

3. Gegenstand nach Anspruch 1 bis 2, dadurch gekennzeichnet, daß die Schichten seitlich durch eine nicht leitende Randeinfassung abgedeckt sind.

4. Gegenstand nach Anspruch 3, dadurch gekennzeichnet, daß die Randeinfassung mit den Schichten verschweißt ist.

5. Gegenstand nach Anspruch 1 bis 4, dadurch gekennzeichnet, daß die Schichten aus Gummi bestehen.

6. Gegenstand nach Anspruch 1 bis 5, dadurch gekennzeichnet, daß der Verstellwiderstand selbsttätig justierbar ist.

## Claims

1. An electrically conducting table or floor covering comprising a conducting layer made of a continuous piece of electrically conducting rubber or plastic and connected with a metallic conductor to an earth lead, and a wear layer arranged above the conducting layer and having a higher electrical resistance than the conducting layer, characterized in that the conducting layer has protuberances into closely adjacent areas, these protuberances completely penetrating the wear layer in the direction of the wear surface, in that the conducting layer is covered on the wear layer remote side by an insulating layer having an extremely high electrical resistance, and in that the metallic conductor contains a variable resistor.

2. An article according to Claim 1, characterized in that the layers are interbonded nondetachably.

3. An article according to Claim 1 or 2, characterized in that the layers are covered on the side by a nonconducting edge trim.

4. An article according to Claim 3, characterized in that the edge trim has been welded to the layers.

5. An article according to Claims 1 to 4, characterized in that the layers consist of rubber.

6. An article according to Claims 1 to 5, characterized in that the variable resistor is self-adjustable.

## Revendications

1. Revêtement de table ou de sol électriquement conducteur comprenant une couche de mise à la terre en caoutchouc ou en matière plastique électriquement conducteurs réalisé d'une pièce et connecté par un conducteur métallique à une ligne de mise à la terre, ainsi qu'une couche d'usure disposée au-dessus de la couche de mise à la terre, qui présente une résistance électrique plus élevée que la couche de mise à la terre, caractérisé en ce que la couche de mise à la terre présente des saillies dans des zones de la surface proches les unes des autres qui traversent complètement la couche d'usure en direction de la surface d'usure, que la couche de mise à la terre est recouverte, du côté faisant face à la couche d'usure par une couche isolante à résistance électrique extrêmement élevée et en ce que le conducteur métallique contient une résistance réglable.

2. Objet selon la revendication 1, caractérisé en ce que les couches sont assemblées les unes aux autres de manière indissociable.

3. Objet selon les revendications 1 et 2, caractérisé en ce que les couches sont recouvertes latéralement par un bord non conducteur.

4. Objet selon la revendication 3, caractérisé en ce que le bord est assemblé aux couches par soudage.

5. Objet selon les revendications 1 à 4, caractérisé en ce que les couches sont réalisées en caoutchouc.

6. Objet selon les revendications 1 à 5, caractérisé en ce que la résistance réglable peut être adaptée automatiquement.